# EUROPÄISCHE PATENTANMELDUNG

(11) **EP 1 655 676 A1**
(43) Veröffentlichungstag der Anmeldung: **10.05.2006**
(21) Anmeldenummer: 04025992.1
(22) Anmeldetag: 03.11.2004
(51) Int. Cl.: G06F 17/30

(54) **Datenbanksystem**

(71) Anmelder: Abitz & Partner - Patentanwälte, 81679 München (DE)
(72) Erfinder: Morf, Jan, Dr., 81927 München (DE); Fichter, Robert, Dr., 85748 Garching (DE)
(74) Vertreter: Morf, Jan Stefan

(57) **Zusammenfassung**

Ein Verfahren zum Erstellen eines Datenbanksystems umfasst das Ablegen von Rohdaten (5), die von einer ersten externen Quelle (4) eingehen und ein Kategorisierungsmerkmal tragen, in einer Hauptdatenbank (1), das Abfragen von Informationen (7), die die Rohdaten (5) ergänzen, bei einer zweiten externen Quelle (6), und das Ablegen der von der zweiten externen Quelle (6) eingehenden ergänzenden Informationen (7) teils in der Hauptdatenbank (1) und teils in mindestens einer Supplementärdatenbank (2). Ein Computerprogramm führt dieses Verfahren durch und ein Computerprogrammerzeugnis umfasst ein computerfähiges Medium, auf dem eine Computerprogrammlogik gespeichert ist, die dieses Computerprogramm umfasst.

## Beschreibung

Die vorliegende Erfindung betrifft ein Verfahren zur Verarbeitung kategorisierter schutzrechtsbezogener Daten sowie ein Computerprogramm und ein Computerprogrammerzeugnis dazu. Insbesondere betrifft die Erfindung die Erstellung von Berichten bestimmter Kategorien zu Schutzrechten, die in einem bestimmten Zeitraum in einer Datenbank abgelegt wurden.

Die Verwaltung schutzrechtsbezogener Daten wie Bibliographien, Volltexte oder auch bildliche Wiedergaben von Patenten, Patentanmeldungen oder Gebrauchsmustern mittels Datenbanksystemen ist bekannt. Diese so genannten Patentinformationssysteme werden im Anschluss an die Publikation von Schutzrechten mit deren Daten aus verschiedenen Quellen befüllt, beispielsweise der elektronischen Daten des Europäischen Patentamts (Espacenet®) oder der Daten verschiedener kommerzieller Anbieter wie Micropatent® oder Derwent®.

Um kein neu veröffentlichtes Schutzrecht zu versäumen, können beispielsweise bei kommerziellen Anbietern so genannte Suchprofile hinterlegt werden, wobei der Kunde solcher Anbieter in regelmäßigen Abständen eine Benachrichtigungsdatei über die dem Suchprofil entsprechenden, dem Datenbestand des Anbieters in einem bestimmten Zeitraum hinzugefügten, Schutzrechte erhält. Ein Suchprofil kann die verschiedensten Selektionskriterien aufweisen wie IPC-Klassen, Anmeldernamen, Erfindernamen oder auch freie Textbegriffe (z. B. Stichwörter). Die Benachrichtigungsdatei umfasst mindestens die Identifikationsnummer, beispielsweise die Patentnummer, eines jeden gefundenen Schutzrechts und darüber hinaus weitere, häufig vom Kunden bestimmbare Zusatzdaten wie Titel, Anmelder, Erfinder, IPC-Klassen oder Hauptanspruch pro Schutzrecht.

Aus der DE 102 15 495 A1 ist es beispielsweise bekannt, von einer externen Datenquelle mittels eines Standardsuchprofils ein Unternehmen betreffende Daten zu laden, in einer internen relationalen Datenbank abzulegen und zu verteilen. Dazu ist es allerdings notwendig, dass die über das Standardsuchprofil erhaltenen Dokumente manuell mit Schlagwörtern versehen werden.

Ein wesentlicher Nachteil ist außerdem, dass die basierend auf den Suchprofilen gelieferten Dateien nur sehr begrenzte Informationen enthalten. Dies liegt häufig in der Architektur der entsprechenden Programm- und Datenbanksysteme begründet, die es nicht erlaubt, eine Vielzahl von Einzelinformationen pro Schutzrecht und darüber hinaus große Dateien wie den Volltext oder die bildliche Wiedergabe aller Seiten des Schutzrechts, beispielsweise als Multipage-TIFF-Datei oder als PDF-Datei, in einer Datenbank aufzunehmen.

Es ist aber für den Benutzer solcher Patentinformationssysteme wünschenswert, die knappen Informationen pro Schutzrecht, die er aufgrund seines Suchprofils regelmäßig mit der Benachrichtigungsdatei erhält, mit den oben ausgeführten weiteren Detailinformationen zu ergänzen und diese Gesamtinformationen in einem für ihn einheitlichem Programm- und Datenbanksystem abzulegen.

Aufgabe der vorliegenden Erfindung ist es daher, ein Verfahren und ein Computerprogramm zur Durchführung dieses Verfahrens bereit zu stellen, das die aufgrund eines Suchprofils von einem externen Lieferanten erhaltenen begrenzten Schutzrechtsdaten um alle weiteren verfügbaren Daten ergänzt und in einem für den Benutzer einheitlich erscheinenden Programm- und Datenbanksystem ablegt.

Diese Aufgabe wird gelöst durch ein Verfahren zum Erstellen eines Datenbanksystems, welches die folgenden Schritte umfasst:
(1) Ablegen von Rohdaten, die von einer ersten externen Quelle eingehen und ein Kategorisierungsmerkmal tragen, in einer Hauptdatenbank,
(2) Abfragen von Informationen, die die Rohdaten ergänzen, bei einer zweiten externen Quelle, und
(3) Ablegen der von der zweiten externen Quelle eingehenden ergänzenden Informationen teils in der Hauptdatenbank und teils in mindestens einer Supplementärdatenbank.

Zur Vorbereitung des erfindungsgemäßen Verfahrens wird bei der ersten externen Quelle mindestens ein Rechercheprofil hinterlegt, aufgrund dessen regelmäßig Rohdaten erzeugt werden, die dem erfindungsgemäßen Verfahren zugeführt werden. Das mindestens eine Rechercheprofil wird bei der ersten externen Quelle beispielsweise in regelmäßigen Intervallen auf den seit dem letzten Lauf des Rechercheprofils neu in der ersten externen Quelle aufgenommenen Datenbestand angewandt. Die dabei gewonnenen Daten können als Rohdaten für das erfindungsgemäße Verfahren verwendet werden.

Die Rohdaten des Schritts (1) des erfindungsgemäßen Verfahrens sind bevorzugt in einer Variante (a) in einer Benachrichtigungsdatei enthalten, welche regelmäßig strukturiert ist. Diese Datei enthält beispielsweise einzelne Zeilen, welche jeweils ein Datenobjekt repräsentieren. In einer Zeile sind alle Einzelinformationen zu diesem Datenobjekt enthalten. Die Einzelinformationen, auch Felder genannt, sind entweder durch Trennzeichen wie Kommata oder Semikolons voneinander getrennt, oder weisen eine vordefinierte Zeichenanzahl auf und können aufgrund dieser bekannten Länge programmtechnisch einfach voneinander getrennt werden. Wesentlich ist, dass genau eine Einzelinformation einen eineindeutigen Wert darstellt, die die gesamte Zeile individualisiert. Beispielsweise kann eine Zeile die Seriennummer eines Schutzrechts inklusive dessen Länderkennzeichens und Dokumenttypkennzeichen enthalten; diese Kombination identifiziert ein Schutzrecht weltweit eindeutig.

Die Rohdaten können aber auch in einer Variante (b) über Datenfernübertragungssysteme wie das Internet bezogen werden. Dabei ist es denkbar, dass lediglich ein Hinweis von der ersten externen Quelle empfangen wird, der das Vorhandensein neuer Rohdaten ankündigt. Über diesen Hinweis kann dann beispielsweise eine Liste mit URLs (Uniform Resource Locator) bezogen werden, wobei jeder URL einem individuellen Datenobjekt der oben ausgeführten Ausführungsform (a) entspricht. Die über diesen URL verknüpften Daten werden eingelesen und wie die Daten aus der Benachrichtigungsdatei weiter verarbeitet. Es ist dabei möglich, dass die Daten im XML-Format von der ersten externen Quelle bereitgestellt werden.

Die Rohdaten weisen ferner ein Kategorisierungsmerkmal auf. Damit wird die eindeutige Zuordnung der gemäß der Variante (a) oder (b) bezogenen Daten zu einer Kategorie gewährleistet. Eine Kategorie im Sinne dieser Erfindung ist generell ein Merkmal, welches die Aufteilung der Gesamtheit aller im erfindungsgemäßen Datenbank- und Programmsystem befindlichen Datensätze in einzelne Bereiche ermöglicht. Denkbar sind technische Kategorien analog der internationalen Patentklassifizierung oder vom Benutzer des erfindungsgemäßen Programm- und Datenbanksystem erstellte Kategorien, die es ihm ermöglichen, die einzelnen Datensätze nach seinen Wünschen zu sortieren, beispielsweise Projektkennzeichen, Produktkennzeichen und Archivierungsangaben. Das Kategorisierungsmerkmal kann beispielsweise in jedem individuellen Datenobjekt als zusätzliche Angabe enthalten sein, anhand der Benachrichtigungsdatei (Variante (a)), beispielsweise anhand ihres Namens, oder anhand einer Angabe in dem Hinweis nach Variante (b) ermittelt werden. Es ist auch möglich, dass das primär ermittelte Kategorisierungsmerkmal noch nicht der vom Benutzer gewünschten textlichen Wiedergabe entspricht. Daher kann eine Konvertierung über eine 1:1-Zuordnung des ermittelten Kategorisierungsmerkmals zu der vom Benutzer gewünschten textlichen Wiedergabe sinnvoll sein, beispielsweise über eine entsprechende Datenbanktabelle.

Beim Ablegen eines Datenobjekts in der Hauptdatenbank wird das vom Benutzer gewünschte Kategorisierungsmerkmal jedem Datensatz hinzugefügt. Alle einzelnen Datenobjekte werden in der einzigen Hauptdatenbank abgelegt. Es ist wesentlich, dass die Hauptdatenbank nicht auf mehrere Entitäten aufgeteilt wird, da ansonsten eine einheitliche Verwaltung der Vielzahl der Datenobjekte mit der entsprechenden Kategorisierung nicht mehr gewährleistet ist.

Die Hauptdatenbank kann neben den von der ersten externen Quelle erhalten Rohdaten bereits weitere Daten enthalten, beispielsweise interne Verwaltungsfelder, Benutzerinformation, Datums- und Zeitangaben und Verschlüsselungsinformationen.

Gemäß Schritt (2) des erfindungsgemäßen Verfahrens werden zu jedem neu in der Hauptdatenbank angelegten oder anzulegenden Datensatz weitere Informationen von einer zweiten externen Quelle (ggf. automatisch) abgefragt. Diese Abfrage kann unmittelbar nach dem Ablegen der Rohdaten in der Hauptdatenbank erfolgen, zeitgleich mit dem Ablegen der Rohdaten, beispielsweise als paralleler Task, oder auch schon vor dem Ablegen der Rohdaten in der Hauptdatenbank. Wesentlich ist, dass diese weiteren Informationen die Rohdaten ergänzen. Beispiele hierfür sind die vollständigen Bibliographieinformationen von Literaturstellen oder Schutzrechten, die Volltexte und die bildlichen Wiedergaben dazu. Zur Abfrage der ergänzenden Daten wird bevorzugt die eineindeutige Information, die mit den Rohdaten geliefert wird und zur Identifizierung eines Datensatzes verwendet wird, herangezogen.

Die zweite externe Quelle kann von der ersten externen Quelle verschieden oder mit ihr identisch sein. Beispielsweise ist es denkbar, die Rohdaten von einem kommerziellen Anbieter wie Micropatent® zu beziehen und die ergänzenden Daten aus dem Espacenet® des europäischen Patentamts zu laden oder wiederum von Micropatent®.

In Schritt (3) des erfindungsgemäßen Verfahrens werden die ergänzenden Informationen der zweiten externen Quelle abgelegt. Hierbei ist es wesentlich, dass die Daten teils in der Hauptdatenbank und teils in mindestens einer Supplementärdatenbank abgelegt werden. Bevorzugt erfolgt die Aufteilung dergestalt, dass die reinen textlichen Informationen wie Bibliographiedaten vollständig in der Hauptdatenbank abgelegt und die Daten, die mehr Speicherplatz benötigen, in der mindestens einen Supplementärdatenbank gespeichert werden. Der Aufbau der Supplementärdatenbanken wird dabei so gesteuert, dass jeweils beim Erreichen einer bestimmten Größe oder einer bestimmten Datensatzanzahl der aktuellen Supplementärdatenbank dieser keine weiteren Datensätze mehr hinzugefügt werden, sondern eine neue leere Supplementärdatenbank angelegt wird, die ab diesem Zeitpunkt wieder für die Aufnahme weiterer Datensätze zur Verfügung steht. Dieses Verfahren des Datenbanksplittings kann beliebig fortgesetzt werden, sodass praktisch keine physikalische Größengrenze mehr für die Supplementärdatenbanken vorhanden ist. Die Hauptdatenbank selbst hingegen beinhaltet wie oben beschrieben nur textliche Informationen, sodass das Größenwachstum extrem niedrig ist und somit nicht befürchtet werden muss, dass das erfindungsgemäße Datenbanksystem an Performanz verliert.

In einer speziellen Ausführungsform des erfindungsgemäßen Verfahrens ist daher jeweils einem Datensatz in der Hauptdatenbank genau ein Datensatz in der mindestens einen Supplementärdatenbank zugeordnet. Diese eineindeutige Zuordnung ermöglicht wie oben bereits dargestellt eine Auslagerung großer Datenobjekte, die die Performanz der Hauptdatenbank beeinträchtigen können, in eine Vielzahl von Supplementärdatenbanken.

Um ein Zusammenarbeiten der Hauptdatenbank mit der mindestens einen Supplementärdatenbank zu gewährleisten, enthält jeder Datensatz der Hauptdatenbank vorzugsweise einen Verweis, in welcher der Supplementärdatenbanken die den Datensatz ergänzenden Informationen zu finden sind und einen Verweis, welcher Datensatz in der entsprechenden Supplementärdatenbank die den Datensatz der Hauptdatenbank ergänzenden Informationen enthält. Diese Verweise sind in einem oder zwei Feldern des Datensatzes der Hauptdatenbank untergebracht. Es wird also beim Erstellen eines Datensatzes in der mindestens einen Supplementärdatenbank ein Querverweis auf diesen Datensatz in der Hauptdatenbank erstellt.

Ein einer speziellen Ausführungsform des erfindungsgemäßen Verfahrens erfolgt in der Hauptdatenbank die Ablage von Bibliographiedaten von Schutzrechten und in der mindestens einen Supplementärdatenbank die zu den Schutzrechten gehörenden Volltexte und/oder bildlichen Wiedergaben der Schutzrechte. Insbesondere bei Schutzrechten wie Patenten, Patentanmeldungen und Gebrauchsmustern sind die Bibliographiedaten hervorragend erschlossen und standardisiert. Ferner gibt es zu einer Vielzahl von Schutzrechten die entsprechenden Volltexte oder bildlichen Wiedergaben, beispielsweise als PDF- oder Multipage-TIFF-Dateien.

Für den Benutzer der Software, die das erfindungsgemäße Verfahren implementiert, ist die Hauptdatenbank der zentrale Einstiegspunkt in das Verwaltungssystem dieser Erfindung. Die in der mindestens einen Supplementärdatenbank enthaltenen Informationen sind ihm nicht direkt zugänglich. Es ist daher eine bevorzugte Ausführungsform der vorliegenden Erfindung, dass unter Verwendung der Daten der Hauptdatenbank die Daten der mindestens einen Supplementärdatenbank recherchierbar sind. Für den Benutzer ist es daher vollkommen nebensächlich, in wie vielen Supplementärdatenbanken die Daten abgelegt sind. Für ihn ist das einzige Benutzerinterface die Hauptdatenbank selbst.

Ein weiterer Vorteil der Erfindung liegt darin, dass durch die Verwendung kategorisierter Daten eine Hauptdatenbank aufgebaut wird, in der die enthaltenen Dokumente bzw. Datensätze kategorisiert sind. Wie bereits ausgeführt, können die Kategorisierungsmerkmale unterschiedlicher Natur sein und verhelfen dem Benutzer dazu, aus einer Vielzahl in der Hauptdatenbank enthaltenen Dokumente bzw. Datensätze eine für ihn für den gerade gewünschten speziellen Anwendungszweck eingegrenzte Untermenge des Gesamtdatenbestandes zu erzeugen. Eine Recherche in den in der mindestens einen Supplementärdatenbank abgelegten Volltextinformationen kann dann auf genau diejenigen Dokumente eingegrenzt werden, die in der vom Benutzer gerade gewünschten Kategorie enthalten sind. Dabei kann die erfindungsgemäße Computerprogrammlogik Möglichkeiten umfassen, zunächst eine Eingrenzung des gesamten Datenbestandes der Hauptdatenbank über die vom Benutzer gerade gewünschte Kategorie vorzunehmen und dann die vom Benutzer gewünschten Volltext-Suchbegriffe auf den Gesamtdatenbestand der mindestens einen Supplementärdatenbank anzuwenden und als abschließenden Schritt beide erhaltenen Untermengen mit logischen (boolschen) Operatoren wie UND, ODER oder NICHT zu verknüpfen und als Folge davon, beispielsweise durch Anwendung des UND-Operators, nur solche Dokumente zu erhalten, die sowohl in der vom Benutzer gewünschten Kategorie enthalten sind als auch die vom Benutzer gewünschten Volltextbegriffe enthalten. Im Wesentlichen werden hierbei beispielsweise zwei Kollektionen von Dokumenten erzeugt, die dann über die boolschen Operatoren miteinander verknüpft werden. Die Verknüpfung und die eineindeutige Zuordnung zwischen den Dokumenten der Hauptdatenbank und der mindestens einer Supplementärdatenbank erfolgt beispielsweise über die oben beschriebenen Verweise in der Hauptdatenbank.

Im Gegensatz zu herkömmlichen papiergebundenen Archivierungslösungen ist es mit der Erfindung möglich, einzelne Dokumente mehreren unterschiedlichen Kategorien zuzuweisen. Diese sogenannte 1:N-Beziehungen sind mit herkömmlicher Ablagesystematik in papiergebundenen Ordnern nicht möglich. Ein besonderer Vorteil der Kategorisierung im Zusammenspiel mit den Verweisen und der speziellen Datenbankarchitektur der Erfindung liegt für den Benutzer also darin, dass er sich beliebige Untermengen der Gesamtdaten der Hauptdatenbank erzeugen und eine Textsuche in den dazugehörigen Volltextinformationen performant durchführen kann, wohingegen bei anderen computergestützten Datenbanksystemen, bei denen Volltexte und dazugehörige Bibliographieinformationen in einer Datenbank abgelegt werden, erhebliche Einbußen bei der Leistungsfähigkeit zu verzeichnen sind, wenn eine bestimmte Größenordnung der Datenbank überschritten ist.

Besonders vorteilhaft ist es außerdem, wenn für die Anzeige der einzelnen Kategorien von Dokumenten statische Indices verwendet werden, die zwar dynamisch beim Zugang neuer Daten oder in regelmäßigen Aktualisierungsintervallen aktualisiert werden, aber nicht bei jedem Aufruf neu aufgebaut werden müssen. Dadurch wird ein erheblicher Performanzgewinn erzielt, die dem Benutzer die Arbeit mit einem die Erfindung umsetzenden System stark vereinfacht. Insbesondere ist es vorteilhaft, wenn alle Indices in der Hauptdatenbank, also in derselben physikalischen Datei, enthalten sind.

Besonders bevorzugt ist es, wenn das Übersenden der Rohdaten von der ersten externen Quelle sowie das Abfragen und das Übersenden der ergänzenden Daten von der zweiten externen Quelle jeweils über das Internet erfolgen.

Insbesondere ist es vorteilhaft, wenn die kategorisierte Hauptdatenbank von einem externen User über das Internet abfragbar ist. Damit wird die Lokalität, an der das erfindungsgemäße Datenbank- und Programmsystem physikalisch angesiedelt sind, vollkommen nebensächlich. Insbesondere bei Dienstleistern, die den Aufbau und die Pflege der Hauptdatenbank und der mindestens einen Supplementärdatenbank für andere betreiben, ist diese Ausführungsform von Vorteil.

Von besonderem Vorteil ist die Möglichkeit, aus den in der Hauptdatenbank und in der mindestens einen Supplementärdatenbank enthaltenen Daten Berichte zu erzeugen. Wie oben ausgeführt, haben viele Unternehmen ein Interesse daran, über Neuveröffentlichungen, insbesondere Schutzrechte, ihrer Mitbewerber regelmäßig informiert zu werden. Allerdings ist es wünschenswert, dass individuelle Benutzer nur über Dokumente in von diesen Benutzern gewünschten Kategorien informiert werden, um eine Informationsüberflutung zu vermeiden. Unter Anwendung des erfindungsgemäßen Verfahrens ist es nun möglich, die für solche Berichte notwendigen Daten zu sammeln, intelligent in Kategorien abzulegen und für eine Vielzahl von Benutzern entsprechende Berichte zu erzeugen. Es ist daher eine weitere bevorzugte Ausführungsform dieser Erfindung, unter Verwendung der Daten der Hauptdatenbank, gegebenenfalls ergänzt durch Daten der mindestens einen Supplementärdatenbank, automatisch mindestens einen Bericht zu in der Hauptdatenbank zu einer gegebenen Kategorie eingegangenen Daten innerhalb eines Zeitraums zu erstellen, wobei der Anfangspunkt des Zeitraums vor dem Erstellungszeitpunkt des Berichts und der Endpunkt des Zeitraums der Erstellungszeitpunkt des Berichts ist. Üblicherweise wird ein Bericht wöchentlich, zweiwöchentlich oder monatlich erstellt werden, in Abhängigkeit der zu erwartenden Dokumentenanzahl.

Besonders vorteilhaft ist es, wenn die erstellten Berichte über das Internet an mindestens einen externen Empfänger versandt werden. Dies ermöglicht die Positionierung von Dienstleistern, die für Kunden oder Mandanten die kategorisierte Datensammlung betreiben und diesen die Berichte per E-Mail zusenden. Hierbei ist es von besonderem Vorteil, wenn das Datenbanksystem nicht nur mit den bekannten E-Mail-Systemen wie Outlook®, Netscape® oder Lotus Notes® zusammen arbeitet, sondern direkt mit diesen integriert ist, wie dies beispielsweise bei Lotus Notes® der Fall ist. Bei einer solchen Integration können direkt aus der Hauptdatenbank heraus Berichte versendet werden, ohne dass eine fehleranfällige Schnittstelle zu einem E-Mail-System bereitgestellt werden muss.

Es ist weiterhin eine besonders bevorzugte Ausführungsform dieser Erfindung, dass die Hauptdatenbank und die mindestens eine Supplementärdatenbank hierarchische Datenbanken sind. Eine verfügbare hierarchische Datenbanklösung ist das Produkt Lotus Domino® der IBM Corporation. Hierarchische Datenbanken eignen sich im Gegensatz zu anderen, beispielsweise relationalen, objektorientierten, Netzwerk-Datenbanken, hervorragend für die Verwaltung von Texten und Dateianhängen. Jede Datenbank wird hierbei in einer eigenen physikalischen Datei abgelegt, die für sich verwendbar ist und neben den eigentlichen Daten auch den Programmiercode enthält. Ein umständliches Bereitstellen von Software, die Daten aus relationalen Datenbanken abfragt und bereitstellt, entfällt. Ebenso entfällt die aufwendige Konfiguration und Pflege, beispielsweise von Tablespaces oder anderen Elementen, die in Verbindung mit relationalen Datenbanksystemen notwendig sind. Gleichwohl stand es nicht zu erwarten, dass mit einem hierarchischen Datenbanksystem feldbezogene Daten in Kombination mit großen Volltextinformationen und Dateianhängen performant zu verwalten sind.

Es versteht sich von selbst, dass mit sukzessivem Eingang der Rohdaten von der ersten externen Quelle ein immer umfangreicherer Datenbestand in den Datenbanken der Erfindung aufgebaut wird. Beispielsweise kann zunächst eine leere Hauptdatenbank angelegt werden, die ein erstes Mal mit Rohdaten befüllt wird. Zu diesem Zeitpunkt existiert beispielsweise noch keine Supplementärdatenbank. Sobald die Rohdaten ergänzende Daten von einer zweiten externen Quelle bezogen wurden, wird eine Supplementärdatenbank angelegt, in der die ergänzenden Daten abgelegt werden. In beispielsweise wöchentlichem Rhythmus werden nun weitere Rohdaten bezogen und zusammen mit den ergänzenden Informationen in den Datenbanken der Erfindung ablegt, sodass sich im Laufe der Zeit in umfassendes kategorisiertes Daten- oder Dokumentenarchiv ergibt. Es ist auch ein täglicher, monatlicher, vierteljährlicher, halbjährlicher oder jährlicher Rhythmus denkbar.

Gegenstand der vorliegenden Erfindung ist weiterhin ein Computerprogramm zur Durchführung des erfindungsgemäßen Verfahrens, insbesondere ein Computerprogrammprodukt, welches direkt in den Speicher eines digitalen Computers geladen werden kann und Softwarecodeabschnitte umfasst, mit denen die Schritte des erfindungsgemäßen Verfahrens ausgeführt werden können, wenn das Produkt auf einem Computer läuft.

Gegenstand der vorliegenden Erfindung ist außerdem ein Computerprogrammerzeugnis mit einem computerfähigen Medium, auf dem eine Computerprogrammlogik gespeichert ist, die das Computerprogramm zur Durchführung des erfindungsgemäßen Verfahrens umfasst. Als computerfähiges Medium kann beispielsweise eine CD, DVD, Festplatte oder ein RAM- oder programmierbarer ROM-Baustein verstanden werden.

Es ist dabei bevorzugt, wenn das Computerprogramm Teil der Hauptdatenbank ist, also der Computerprogrammcode in derselben physikalischen Datei abgelegt ist wie die Daten der Hauptdatenbank. Es muss hierbei nur die Hauptdatenbank selbst geöffnet werden, um das Computerprogramm zu starten. Gleichzeitig kann sich Computerprogrammcode in der Hauptdatenbank befinden, um die Daten aus der Hauptdatenbank und der mindestens einen Supplementärdatenbank abfragen und anzeigen zu können. Das Starten dieses Computerprogrammcodes kann entweder über das native Clientprogramm, das auch zur Entwicklung der Datenbank notwendig ist, oder über einen Web-Browser, beispielsweise Internet Explorer von Microsoft® oder den Netscape® Navigator, geöffnet werden. Dabei kann das Computerprogramm auf dem Client-Computer und/oder auf dem Server-Computer, auf dem die Hauptdatenbank installiert ist, ausgeführt werden.

Ein typisches System, das sich zur Durchführung des erfindungsgemäßen Verfahrens eignet, umfasst daher einen Server-Computer, auf dessen Festplattenspeicher die Hauptdatenbank lokalisiert ist, einen Client-Computer, über den die Hauptdatenbank und das darin enthaltene Computerprogramm geöffnet wird und ein Computer-Netzwerk, das den Client-Computer mit dem Server-Computer verbindet. Die mindestens eine Supplementärdatenbank ist dabei entweder auf dem Festplattenspeicher des Server-Computers oder mindestens eines weiteren Server-Computers abgelegt. Die spezielle Architektur des erfindungsgemäßen Datenbank- und Programmsystems erlaubt es daher, die Hauptdatenbank auf einem anderen physikalischen oder logischen Server abzulegen als die mindestens eine Supplementärdatenbank. Typischerweise wird das erfindungsgemäße Verfahren, direkt auf einem Server ausgeführt, so dass der Benutzer nur noch den Teil der in der Hauptdatenbank enthaltenen Software auf seinem Computer ausführt, der das Abrufen und Anzeigen von Daten betrifft.

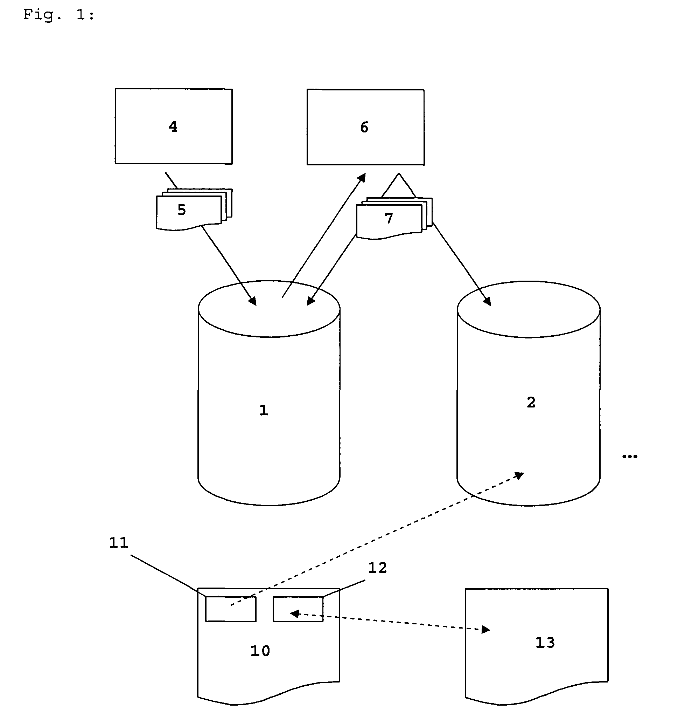

Die Erfindung wird durch die nachfolgende Figur genauer erläutert, ohne dass sie darauf begrenzt werden soll. Es zeigt
- Figur 1:: Ein Diagramm des erfindungsgemäßen Verfahrens.

In der Hauptdatenbank 1 werden Rohdaten 5, die ein Kategorisierungsmerkmal tragen, aus der ersten externen Quelle 4 abgelegt (Schritt (1) des erfindungsgemäßen Verfahrens). Daraufhin werden von einer zweiten externen Quelle 6 die Rohdaten 5 ergänzende Daten 7 angefordert (Schritt (2) des erfindungsgemäßen Verfahrens), teils in der Supplementärdatenbank 2 und teils in der Hauptdatenbank 1 abgelegt (Schritt (3) des erfindungsgemäßen Verfahrens). Die Supplementärdatenbank 2 umfasst das Dokument 13, die Hauptdatenbank das zugehörige Dokument 10. In dem Dokument 10 befinden sich die Felder 11 und 12, die Verweise auf die Supplementärdatenbank 2 und das Dokument 13 enthalten. Damit ist der Zugriff auf die ergänzenden Daten 7 der Supplementärdatenbank 2 über die Hauptdatenbank 1 möglich.

## Patentansprüche

1. Verfahren zum Erstellen eines Datenbanksystems, **gekennzeichnet durch** die folgenden Schritte:
(1) Ablegen von Rohdaten (5), die von einer ersten externen Quelle (4) eingehen und ein Kategorisierungsmerkmal tragen, in einer Hauptdatenbank (1),
(2) Abfragen von Informationen (7), die die Rohdaten (5) ergänzen, bei einer zweiten externen Quelle (6), und
(3) Ablegen der von der zweiten externen Quelle (6) eingehenden ergänzenden Informationen (7) teils in der Hauptdatenbank (1) und teils in mindestens einer Supplementärdatenbank (2).

2. Verfahren nach Anspruch 1, **dadurch gekennzeichnet, dass** jeweils einem Datensatz (10) in der Hauptdatenbank (1) genau ein Datensatz (13) in der mindestens einen Supplementärdatenbank (2) zugeordnet ist.

3. Verfahren nach Anspruch 2, **dadurch gekennzeichnet, dass** beim Erstellen eines Datensatzes (13) in der mindestens einen Supplementärdatenbank (2) ein Querverweis (11, 12) auf diesen Datensatz (13) in der Hauptdatenbank (1) erstellt wird.

4. Verfahren nach einem der Ansprüche 1 bis 3, **dadurch gekennzeichnet, dass** in der Hauptdatenbank (1) die Bibliographiedaten von Schutzrechten und in der mindestens einen Supplementärdatenbank (2) die zu den Schutzrechten gehörenden Volltexte und/oder bildlichen Wiedergaben der Schutzrechte abgelegt werden.

5. Verfahren nach Anspruch 4, **dadurch gekennzeichnet, dass** unter Verwendung der Daten der Hauptdatenbank (1) die Daten der mindestens einen Supplementärdatenbank (2) recherchierbar sind.

6. Verfahren nach einem der Ansprüche 1 bis 5, **dadurch gekennzeichnet, dass** das Übersenden der Rohdaten (6) von der ersten externen Quelle (4) sowie das Abfragen und das Übersenden der ergänzenden Daten (7) von der zweiten externen Quelle (6) jeweils über das Internet erfolgen.

7. Verfahren nach einem der Ansprüche 1 bis 6, **dadurch gekennzeichnet, dass** die Hauptdatenbank (1) von einem externen User über das Internet abfragbar ist.

8. Verfahren nach einem der Ansprüche 1 bis 7, **dadurch gekennzeichnet, dass** unter Verwendung der Daten der Hauptdatenbank (1), gegebenenfalls ergänzt durch Daten der mindestens einen Supplementärdatenbank (2), automatisch mindestens ein Bericht zu in der Hauptdatenbank (1) zu einer gegebenen Kategorie eingegangenen Daten innerhalb eines Zeitraums erstellt wird, wobei der Anfangspunkt des Zeitraums vor dem Erstellungszeitpunkt des Berichts und der Endpunkt des Zeitraums der Erstellungszeitpunkt des Berichts sind.

9. Verfahren nach Anspruch 8, **dadurch gekennzeichnet, dass** die erstellten Berichte über das Internet an mindestens einen externen Empfänger versandt werden.

10. Verfahren nach einem der Ansprüche 1 bis 9, **dadurch gekennzeichnet, dass** die Hauptdatenbank (1) und die mindestens eine Supplementärdatenbank (2) hierarchische Datenbanken sind.

11. Verfahren nach einem der Ansprüche 1 bis 10, **dadurch gekennzeichnet, dass** dem Schritt (1) ein Schritt (0) vorgeschaltet ist, bei dem mindestens ein Rechercheprofil bei der ersten externen Quelle (4) hinterlegt wird, das mindestens eine Recherchenprofil auf den Datenbestand der ersten externen Quelle (4), vorzugsweise in regelmäßigen zeitlichen Abständen angewandt wird und die dabei erhaltenen Daten als Rohdaten (5) dem Schritt (1) zugeführt werden.

12. Computerprogramm zur Durchführung des Verfahrens nach einem der Ansprüche 1 bis 11.

13. Computerprogramm nach Anspruch 12, **dadurch gekennzeichnet, dass** das Computerprogramm Teil der Hauptdatenbank (1) ist.

14. Computerprogrammerzeugnis mit einem computerfähigen Medium, auf dem eine Computerprogrammlogik gespeichert ist, die das Computerprogramm nach einer der Ansprüche 12 bis 13 umfasst.
